(19) **Europäisches Patentamt**

**European Patent Office**

**Office européen des brevets**

(11) **EP 1 055 441 A2**

(12) **EUROPÄISCHE PATENTANMELDUNG**

(43) Veröffentlichungstag:
29.11.2000  Patentblatt 2000/48

(51) Int. Cl.⁷: **B01D 19/00**

(21) Anmeldenummer: **00250129.4**

(22) Anmeldetag: **20.04.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **22.04.1999 DE 19918831**

(71) Anmelder:
**OTTO HEAT Heizungs-, Energie- und Anlagentechnik GmbH & Co., KG**
**57482 Wenden-Gerlingen (DE)**

(72) Erfinder:
- **Rühling, Karin, Dr.-Ing.**
  **01259 Dresden (DE)**
- **Will, Gotthard, Prof. Dr.-Ing. habil.**
  **01237 Dresden (DE)**
- **Weise, Harmut, Prof. Dr.-Ing. habil.**
  **01705 Pesterwitz (DE)**
- **Uhlmann, Dietrich, Dipl.-Ing.**
  **09376 Oelsnitz/E (DE)**

(74) Vertreter:
**Scholz, Hartmut, Dipl.-Ing.**
**Patentanwalt**
**Rheinstrasse 64**
**12159 Berlin (DE)**

(54) **Verfahren und Vorrichtung zum Entgasen von Flüssigkeiten**

(57)     Verfahren und Vorrichtung (10) zum Entgasen von Flüssigkeiten, bei dem die Flüssigkeit radial nach außen und das leichtere Gas radial nach innen in Richtung auf den Rotor (12) einer Zentrifugiervorrichtung gefördert wird. Der Rotor (12) ist mit einer durchbrochenen Tragscheibe (13) und einer durchbrochenen Deckscheibe (14) versehen. Das radial nach innen geförderte Gas gelangt durch einen Gasaustritt (19) in die umgebende Atmosphäre.

Figur 2

**Beschreibung**

Die Erfindung betrifft ein Verfahren und eine Vorrichtung zum Entgasen von Gas enthaltenden Flüssigkeiten.

In der Praxis kommt es in Flüssigkeitskreisläufen unter bestimmten Betriebsführungsbedingungen häufig zur Bildung freier Gasblasen. Exponierte Stellen sind, entsprechend des bekannten Lösungsverhaltens von Gasen in Flüssigkeiten, die Orte niedrigsten Drucks und höchster Temperatur.

Folgen sind beispielsweise die Unterbrechung der Zirkulation für einzelne Abnehmer oder der Ausfall von Pumpen. Hohe Anteile an freien Gasen sind meist mit Geräuschbelästigungen verbunden. Auch sinkt die Lebensdauer der Anlage.

Als störende Gase kommen nicht nur die Hauptbestandteile der Luft, wie Sauerstoff ($O_2$), Stickstoff ($N_2$) und Kohlendioxid ($CO_2$) in Frage. Aus chemischen Reaktionen im Netzwasser können auch Methan ($CH_4$) Wasserstoff ($H_2$) und Schwefelwasserstoff ($H_2S$) entstehen.

Von den im System befindlichen Gasen werden je nach Werkstoffkombination bestimmte Anteile durch korrosive Vorgänge in den Korrosionsprodukten gebunden. Die verbleibenden freien Gasanteile müssen mittels geeigneter Anlagenkomponenten abgeführt werden.

Aufgabe der vorliegenden Erfindung ist es, eine Vorrichtung zu schaffen, mit der gezielt Gase aus Flussigkeiten, wie beispielsweise aus Heizwasserkreisläufen, ausgeschieden werden können, so daß sich bei einem vorgegebenen Anlagendruck und einer definierten Anlagentemperatur keine freien Gase mehr im Kreislauf bilden können.

Gelöst wird diese Aufgabe durch die Maßnahmen gemäß Anspruch 1, insbesondere dadurch, daß die Gas enthaltende Flüssigkeit in einer Zentrifugiervorrichtung in Rotation versetzt wird, die Zentrifugiervorrichtung die Flüssigkeit gasfrei radial nach außen und das freigesetzte Gas radial nach innen fördert, und das freigesetzte Gas radial innen aus der Zentrifugiervorrichtung geleitet wird.

Bei einer Vorrichtung zur Durchführung dieses Verfahrens ist ein Gehäuse, in dem ein um eine Rotorachse drehbarer Rotor gelagert ist und dem Rotor eine durchbrochene Tragscheibe und eine durchbrochene Deckscheibe zugeordnet sind, vorgesehen. Zur Ausgestaltung ist es vorgesehen, daß das Gehäuse über einen Flüssigkeitseintritt für eine zu entgasende Flüssigkeit und über einen Flüssigkeitsaustritt für die entgaste Flüssigkeit mit einem zu entgasenden Flüssigkeitssystem verbunden ist.

Durch diese Maßnahmen wird eine Vorrichtung geschaffen, die nach dem Prinzip der Turbomaschinen arbeitet Sie weist ein Gehäuse auf, in dem ein Rotor drehbar gelagert ist. Der Rotor besteht aus Schaufeln, die zwischen einer durchbrochenen Tragscheibe für den Flüssigkeitseibtritt und einer durchbrochenen Deckscheibe für den Flüssigkeitsaustritt angeordnet sind. Außerhalb der Rotorachse sind ein Flüssigkeitseintrittsstutzen, am äußeren Radius ein Flüssigkeitsaustrittsstutzen und ein in der Rotorachse gelegener Gasaustrittsstutzen vorgesehen.

Ziel dieser Entgasungsvorrichtung, die ähnlich den bekannten Kreiselpumpe arbeitet, ist nicht primär die Erhöhung des Druckes vom Eingangsdruck $p_1$ auf den Ausgangsdruck $p_2$, sondern zur Rotorachse hin ein Druckgefälle zu erzielen. Gleichwohl sind auch Konstruktionen möglich mit zusätzlicher Pumpenfunktion ($p_1 < p_2$) oder Drosselfunktion ($p_1 > p_2$).

In Kreiselpumpen sind Gasausscheidungen und Dampfbildung (Kavitation) unerwünscht, da sie zu Leistungs- und Lebensdauerminderung führen. Aufgrund von partiellen Lösungsdruckunterschreitungen werden gelöste Gase an den Pumpenschaufeln ausgetrieben.

In der Entgasungsvorrichtung wird die Flüssigkeit dabei aufgrund ihrer größeren Masse durch die Zentrifugalkraft radial nach außen gefördert. Das leichters Gas wird aufgrund der Dichteunterschiede gegenüber der Flüssigkeit radial nach innen in Richtung Rotorachse gefördert. Es wird somit der physikalisch bedingte Separationseffekt, der bei Kreiselpumpen vermieden werden soll, bewußt ausgenutzt, um Gase aus dem flüssigen Fördergut auszutragen.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

**Figur 1**   den Einbau einer erfindungsgemäßen Entgasungsvorrichtung in möglicher Betriebsweise;

**Figur 2**   die Seitenansicht der Entgasungsvorrichtung nach der Figur 1, ohne Antrieb;

**Figur 3**   den Druckverlauf über die Entgasungsvorrichtung;

**Figur 4**   die Seitenansicht der Entgasungsvorrichtung nach Figur 1, mit Antrieb durch eine Statorwicklung.

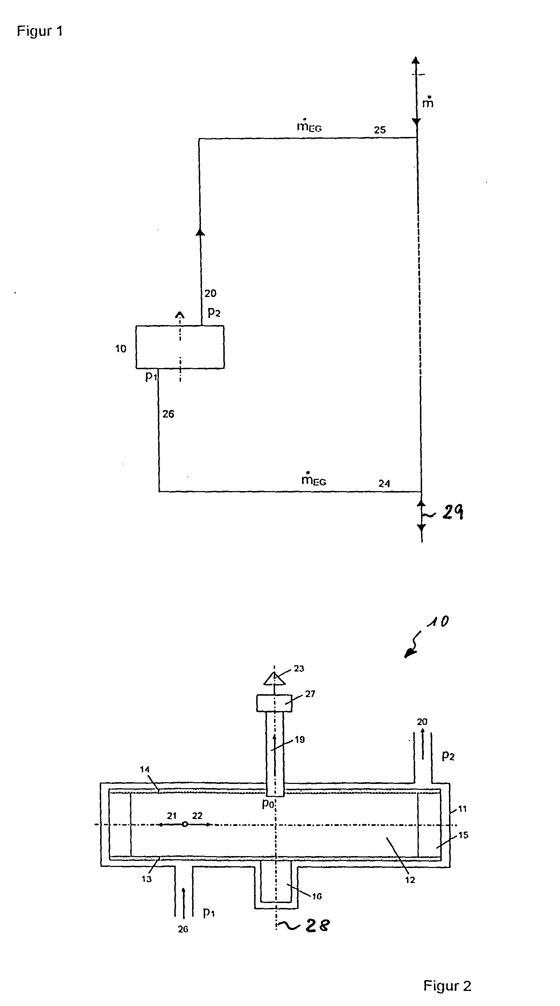

Die in den Figuren 1, 2, 3 und 4 schematisch dargestellte Vorrichtung zum Entgasen von Flüssigkeiten dient beispielsweise zur Beseitigung von im Heizungswasser von Heizungswasserkreislaufsystemen gelöster Luft und anderen Gasen. Sie ist als eine Zentrifuge 10 ausgebildet, in der die Flüssigkeit in Rotation versetzt werden kann. Die Zentrifuge 10 besteht im wesentlichen aus einem Gehäuse 11, in dem ein Schaufelrad oder Rotor 12 drehbar angeordnet ist.

Wie die Figur 1 zeigt, sind die Betriebsweisen der erfindungsgemäßen Entgasungszentrifuge 10 wie folgt möglich:

Einbau im Bypass : $\dot{m}_{EG} < \dot{m}$
Einbau im Hauptstrom :

$$\dot{m}_{EG} \quad = \quad \dot{m}$$

Entgasung ohne Differenzdruck: $p_1 = p_2$
Entgasung mit Pumpbetrieb : $p_1 < p_2$
Entgasung mit Drosselbetrieb : $p_1 > p_2$
Entgasung bei Überdruck : $p_0 > p_b, p_b =$ Atmosphärendruck zur Atmosphäre
Entgasung bei Atmosphärendruck : $p_0 = p_b$
Entgasung bei Unterdruck : $P_0 < P_b$
Bedingung für $p_0$ : $p_0 < p_S$, $p_S =$ geringster Gassättigungsdruck der Flüssigkeiten 24 bzw. 25.

Wie die Figur 2 zeigt, besteht der Rotor 12 im wesentlichen aus einer durchbrochenen Tragscheibe 13 für den Flüssigkeitseintritt 26 und einer durchbrochenen Deckscheibe 14 für den Flüssigkeitsaustritt 20. Der Rotor 12 ist mit Schaufeln 15 versehen und in einem Lager 16 drehbar.

Durch den mechanisch angetriebenen Rotor 12 wird in der Entgasungszentrifuge 10 ein Druckfeld erzeugt, dessen zentrales Druckminimum zur Entgasung der Flüssigkeit ausreicht. Dabei ist die Druckdifferenz zwischer Eintritt und Austritt

$$\Delta p_{EG} \ (\dot{m}_{EG}) \ = \ (p_1 - p_2)(\dot{m}_{EG}).$$

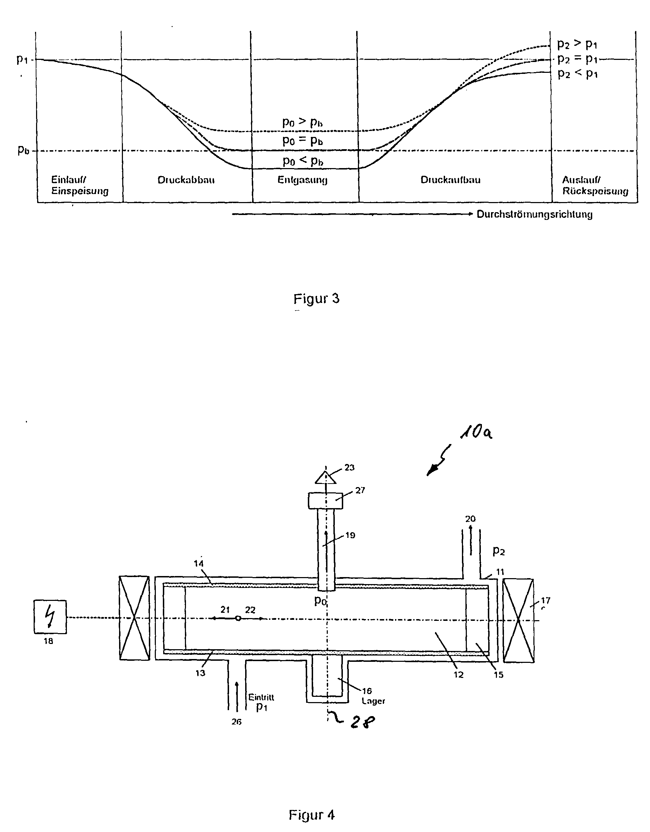

Die Figur 4 zeigt eine Entgasungszentrifuge 10a, in der der Rotor 12 auch als ein Käfigläufer eines elektrischen Antriebmotors mit einer Statorwicklung 17 dient. Das Gehäuse 11 erfüllt dabei die Funktion eines Spalttopfes. Dadurch wird eine hermetische Bauweise möglich. Aber auch andere Antriebsvarianten sind denkbar. Der Motor wird über eine Steuerung 18 gesteuert.

Das Gehäuse 11 weist eine Rotorachse 28 auf. In Bereich der Rotorachse 28 ist der durchbrochenen Deckscheibe 14 ein Gasaustritt 19 zugeordnet, über den das ausgeschiedene Gas in ein Gassammelgefäß 27 gelangt. Der Gasaustritt 19 braucht dabei nicht mit der durchbrochenen Deckscheibe 14 verbunden sein.

Aus dem Gassammelgefäß 27 kann das Gas über ein Entgasungsventil 23 an die freie Atmosphäre abgegeben werden. Dabei öffnet das Entgasungsventil 23 nur in Richtung der Atmosphäre.

Durch die Rotation des Rotors 12 wird die schwerere Flüssigkeit in Förderrichtung 21 radial nach außen geschleudert und dabei entgast. Die entgaste Flüssigkeit 25 gelangt durch den Flüssigkeitsaustritt 20 zurück in das Flüssigkeitssystem 29. Das leichtere Gas wird in Förderrichtug 22 radial nach innen und über den Gasaustritt 19 und das Entgasungsventil 23 aus dem Gehäuse 11 abgeleitet.

Das Gehäuse 11 ist über den Anschluß 20 für die zu entgasende Flüssigkeit 24 und über den Anschluß 26 für die entgaste Flüssigkeit 25 mit dem zu entgasenden Flüssigkeitssystem 29 verbunden.

Die Flüssigkeit, bzw. das Wasser aus dem zu entgasenden Flüssigkeitssystem 29 weist einen Eingangsdruck $p_1$ auf, der gleich, kleiner oder größer dem Austrittsdruck $p_2$ der entgasten Flüssigkeit 25 ist - je nachdem, ob die Entgasungszentrifuge 10/10a differenzdrucklos, als Pumpe oder Drossel betrieben wird.

In der Rotorachse 28 herrscht ein reduzierter Druck $P_0$, der kleiner $p_1$ und $p_2$ ist. Der reduzierte Druck $p_0$ muß unterhalb des geringsten Gassättigungsdruckes $p_S$ des angeschlossenen Flüssigkeitssystems 29 liegen. Der Druck $p_0$ kann größer, kleiner oder gleich dem Atmosphärendruck $p_b$ sein.

Ist der Druck $p_0$ größer als der Druck der umgebenden Atmosphäre $p_b$, so kann die Gasausschleusung durch das Entgasungsventil 23 bei laufender Entgasungszentrifuge 10/10a erfolgen. Ist der Druck $p_0$ gleich oder kleiner dem Atmosphärendruck $p_b$, so ist zum Gasausschleusen durch das Entgasungsventil 23 ein Stop des Rotors 12 bzw. der Entgasungszentrifuge 10/10a erforderlich.

Die Gasausschleusung wird von der Steuerung 18 überwacht und kann zeitabhängig, beispielsweise als Dauerentgasung, Entgasung in festgelegten Zeitintervallen oder in Abhängigkeit von dem gemessenen Gasgehalt erfolgen. Die Entgasungsleistung selber kann durch die Veränderung der Drehzahlen oder durch Drosselung des Durchflusses der Entgasungszentrifuge, bzw. Entgasungsvorrichtung 10/10a variiert werden.

**Bezugszeichen**

| | |
|---|---|
| 10/10a | Entgasungszentrifuge |
| 11 | Gehäuse |
| 12 | Rotor |
| 13 | durchbrochene Tragscheibe |
| 14 | durchbrochene Deckscheibe |
| 15 | Schaufeln |
| 16 | Rotorlager |
| 17 | Statorwicklung |
| 18 | Steuerung |
| 19 | Gasaustritt |
| 20 | Flüssigkeitsaustritt |
| 21 | Flüssigkeitsförderrichtung |
| 22 | Gasförderrichtung |
| 23 | Entgasungsventil |
| 24 | zu entgasende Flüssigkeit |

| 25 | entgaste Flüssigkeit |
| 26 | Flüssigkeitseintritt |
| 27 | Sammelgefäß |
| 28 | Rotorachse |
| 29 | zu entgasendes Flüssigkeitssystem |

**Patentansprüche**

1. Verfahren zum Entgasen von Gas enthaltenden Flüssigkeiten, dadurch gekennzeichnet, daß die Gas enthaltende Flüssigkeit in einer Zentrifugiervorrichtung in Rotation versetzt wird, die Zentrifugiervorrichtung die Flüssigkeit gasfrei radial nach außen und das freigesetzte Gas radial nach innen fördert, und das freigesetzte Gas radial innen aus der Zentrifugiervorrichtung geleitet wird.

2. Verfahren zum Entgasen von Gas enthaltenden Flüssigkeitssystemen, dadurch gekennzeichnet, daß aus dem Gas enthaltenden Flüssigkeitssystem Flüssigkeit in eine um eine Rotorachse drehbare Zentrifugiervorrichtung geleitet und dort in Rotation versetzt wird, die Flüssigkeit gasfrei radial nach außen und das freigesetzte Gas radial nach innen in Richtung der Rotorachse gefördert und durch Entgasungsöffnungen in die umgebende Atmosphäre abgeleitet wird, während die gasfreie Flüssigkeit zurück in das Flüssigkeitssystem gelangt.

3. Vorrichtung zum Entgasen von Gas enthaltenden Flüssigkeiten, gekennzeichnet durch ein Gehäuse (11) in dem ein um eine Rotorachse (28) drehbarer Rotor (12) gelagert ist und dem Rotor (12) eine durchbrochene Tragscheibe (13) und eine durchbrochene Deckscheibe (14) zugeordnet sind, das Gehäuse (11) mit einem Flüssigkeitseintritt (26) für eine zu entgasende Flüssigkeit (24) und einem Flüssigkeitsaustritt (20) für die entgaste Flüssigkeit (25) versehen ist und der Flüssigkeitsaustritt (20) für die entgaste Flüssigkeit (25) mit einem zu entgasenden Flüssigkeitssystem (29) verbunden ist.

4. Vorrichtung nach Anspruch 3, dadurch gekennzeichnet, daß das Gehäuse (11) mit einem Gasaustritt (19) versehen ist, der Gasaustritt (19) in der Rotorachse (28) des Rotors (12) liegt und dem aus dem Gehäuse (11) führenden Gasaustritt (19) ein Gassammelgefäß (27) mit einem Entgasungsventil (23) zugeordnet ist, wobei das Entgasungsventil (23) nur in Richtung der Atmosphäre öffnet.

5. Vorrichtung nach den Ansprüchen 3 und 4, dadurch gekennzeichnet, daß der Gasaustritt (19) gegenüber der durchbrochenen Deckscheibe (14) frei liegt und die Gasausschleusung aus dem Gassammelgefäß (27) von einer Steuerung (18) überwacht wird und zeitabhängig, als Dauerentgasung, Entgasung in festgelegten Zeitintervallen oder in Abhängigkeit von dem gemessenen Gasgehalt erfolgt.

6. Vorrichtung nach den Ansprüchen 3 bis 5, dadurch gekennzeichnet, daß die Drehzahl des Rotors (12) in Abhängigkeit von dem Eintrittsdruck ($P_1$) der zu entgasenden Flüssigkeit (24) und dem Druck ($P_2$) am Flüssigkeitsaustritt (20) steuerbar ist.

7. Vorrichtung nach den Ansprüchen 3 bis 6, dadurch gekennzeichnet, daß der Austrittsdruck ($P_2$) der entgasten Flüssigkeit (25) gleich oder größer dem Eintrittsdruck ($P_1$) der gashaltigen Flüssigkeit (24) ist.

8. Vorrichtung nach den Ansprüchen 3 bis 7, dadurch gekennzeichnet, daß die Entgasungsleistung durch die Veränderung der Drehzahlen oder durch Drosselung des Durchflusses variierbar ist.

9. Vorrichtung nach den Ansprüchen 3 bis 8, dadurch gekennzeichnet, daß der Rotor (12) elektromotorisch antreibbar ist.

10. Vorrichtung nach den Ansprüchen 3 und 9, dadurch gekennzeichnet, daß der Rotor (12) als ein Käfigläufer eines elektrischen Antriebmotors mit einer Statorwicklung (17) und das Gehäuse (11) als ein Spalttopf ausgebildet sind.

Figur 1

Figur 2

$p_2 > p_1$
$p_2 = p_1$
$p_2 < p_1$

$p_1$

$p_0 > p_b$
$p_0 = p_b$
$p_b$
$p_0 < p_b$

| Einlauf/ Einspeisung | Druckabbau | Entgasung | Druckaufbau | Auslauf/ Rückspeisung |

→ Durchströmungsrichtung

Figur 3

10a

23
27
19
20
$p_2$
14
11
21  22
$p_0$
18
17
13
12  15
16
Lager
Eintritt
$p_1$
26
28

Figur 4